# DEMANDE DE BREVET EUROPEEN

(11) **EP 1 488 883 A2**
(43) Date de publication de la demande: **22.12.2004**
(21) Numéro de dépôt: 04370012.9
(22) Date de dépôt: 03.05.2004
(51) Int. Cl.: B23K 37/053

(54) **Dispositif d'aide a la soudure d'elements de tuyauterie**

(30) Priorité: 02.05.2003 FR 0305401
(71) Demandeur: Li-Calzi, Salvatore, 59200 Tourcoing (FR)
(72) Inventeur: Li-Calzi, Salvatore, 59200 Tourcoing (FR)
(74) Mandataire: Hennion, Jean-Claude

(57) **Abrégé**

Le dispositif d'aide (1) à la soudure d'éléments de tuyauterie est caractérisé par une face support (2) comportant un ensemble de protubérances cylindriques (6), chaque protubérance (6) ayant un diamètre déterminé permettant un emboîtement d'un élément de tuyauterie donné, notamment un raccord (10) et son maintien en position pendant l'opération de soudure.

De préférence ce dispositif a deux faces latérales sensiblement verticales (3, 4) , qui comportent chacune le même ensemble d'orifices traversants (7), les orifices (7) des deux faces (3,4) étant disposés au regard les uns des autres en sorte de permettre le passage et le coulissement d'un élément tubulaire (11) donné, dont la longueur (L) est supérieure à la distance (D) entre les deux faces latérales (3,4) , dans deux orifices (7a, 7b) de même diamètre et son maintien en position pendant l'opération de soudure.

## Description

La présente invention concerne le domaine de la soudure d'éléments de tuyauterie entre eux, tels que des tubes et des raccords. Elle concerne plus particulièrement un dispositif d'aide à la soudure d'éléments de tuyauterie.

Pour réaliser la soudure de deux éléments de tuyauterie, l'utilisateur, qu'il soit plombier, chauffagiste ou tout simplement bricoleur, bloque en position l'un des deux éléments en mettant en oeuvre un étau monté sur un établi. Cela oblige en particulier les professionnels à se déplacer lors de leurs interventions avec ce matériel qui est non seulement encombrant mais également lourd. De plus, la mise en oeuvre d'un étau pour assurer le blocage temporaire puis le déblocage de l'élément de tuyauterie nécessite des manipulations qui sont génératrices de perte de temps.

Le but de la présente invention est de proposer un dispositif d'aide à la soudure d'éléments de tuyauterie qui pallie les inconvénients précités.

Selon la présente invention, ce dispositif se caractérise par une face support comportant un ensemble de protubérances cylindriques, chaque protubérance ayant un diamètre déterminé permettant un emboîtement d'un élément de tuyauterie donné, notamment un raccord et son maintien en position pendant l'opération de soudure.

Ainsi il suffit à l'utilisateur de solidariser l'élément de tuyauterie dont il souhaite le maintien en position pendant l'opération de soudure sur la face support du dispositif en l'emboîtant sur la ou l'une des protubérances cylindriques dont le diamètre correspond à l'élément tubulaire en question.

On comprend que cet emboîtement doit être suffisant pour assurer le maintien en position de l'élément de tuyauterie pendant l'opération de soudure mais doit permettre également un retrait facile dudit élément une fois l'opération de soudure réalisée. En pratique, pour un élément de tuyauterie ayant un diamètre intérieur donné, la protubérance correspondante à un diamètre extérieur légèrement inférieur, par exemple de 0.5 mm.

Les protubérances cylindriques peuvent être des éléments rapportés, solidarisés perpendiculairement à la face support, cette solidarisation pouvant être obtenue notamment par vissage, soudage ou collage.

Les protubérances cylindriques peuvent également être des tronçons de tube creux, qui sont fixés sur ladite face support.

Les protubérances cylindriques peuvent également être des prolongements en saillie de ladite face support, étant dans ce cas dans ,le même matériau constitutif de ladite face.

Dans une variante de réalisation, le dispositif comporte un ensemble de protubérances cylindriques pour l'emboîtement de raccords pour tubes de diamètre allant de 10 à 18 mm, par exemple des diamètres suivants: 10, 12, 14, 16 et 18 mm. Ces diamètres correspondent à des raccords standards, connus sous les dénominations « sphéro », « soudo » ou « GCU », et commercialisés par exemple par la société BROSSETTE.

Pour garantir un bon maintien en position de l'élément de tuyauterie emboîté sur la protubérance cylindrique correspondante, il est souhaitable que ladite protubérance ait une hauteur de 0.5 à 2 cm. Pour un jeu de 0.5 mm entre le diamètre intérieur de l'élément de tuyauterie et le diamètre extérieur de la protubérance cylindrique correspondante, une hauteur de protubérance de 1 cm donne de bons résultats, notamment lorsque la face support a une disposition horizontale.

Dans une variante de réalisation préférée, le dispositif se caractérise en outre par deux faces latérales sensiblement verticales, qui comportent chacune le même ensemble d'orifices traversants ; les orifices des deux faces sont disposés au regard les uns des autres en sorte de permettre le passage et le coulissement d'un élément tubulaire donné, dont la longueur (L) est supérieure à la distance (D) entre les deux faces latérales, dans deux orifices de même diamètre et son maintien en position pendant l'opération de soudure.

Selon cette disposition particulière, le maintien en position de l'élément tubulaire est obtenu simplement par son propre poids, venant à l'appui sur le bord interne des deux orifices à travers lesquels l'élément est enfilé. Ce maintien en position s'avère non seulement suffisant mais présente au contraire un avantage fondamental par rapport au blocage par l'étau traditionnel, à savoir que l'utilisateur peut faire pivoter l'élément tubulaire sur lui-même, s'il le souhaite, avant, pendant et après l'opération de soudure. Cet avantage existe de la même manière pour les protubérances cylindriques.

La face support, équipée des protubérances cylindriques, peut avantageusement former une entretoise entre les deux faces latérales pourvues des orifices traversants.

De préférence, dans ce cas, le dispositif de l'invention se présente sous la forme d'une structure creuse à quatre faces, une face complémentaire formant entretoise entre les bords inférieurs des deux faces latérales.

Dans une variante de réalisation, le dispositif comporte également des moyens de mise à hauteur et/ou des moyens de fixation à un matériel support. Ces moyens de mise à hauteur ou de fixation ont bien sûr pour but de faire en sorte que la face support et éventuellement les faces latérales soient à une hauteur convenable pour l'utilisateur qui effectue l'opération de soudure. Les moyens de mise à hauteur peuvent consister en un pied ou un trépied.

Dans une variante simplifiée de réalisation, le dispositif d'aide à la soudure d'éléments de tuyauterie, selon la présente invention, comporte des moyens d'articulation permettant la mise à plat les unes contres les autres d'au moins la face support et les deux faces latérales. Ainsi on obtient pour ledit dispositif un encombrement d'autant plus réduit pour son transport sur le lieu d'intervention.

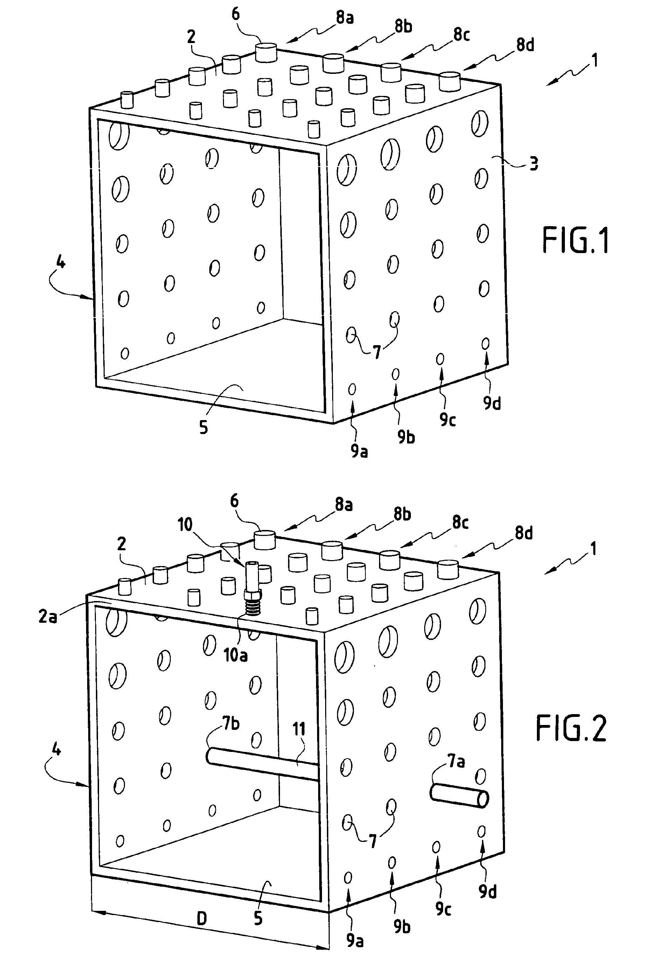

La présente invention sera mieux comprise à la lecture de la description qui va être faite ci-après d'un exemple de réalisation d'un dispositif d'aide à la soudure d'éléments de tuyauterie se présentant sous la forme d'une structure creuse à quatre faces, illustrée par les dessins annexés dans lesquels les figures 1 et 2 sont des représentations schématiques en perspective du dispositif, la figure 2 illustrant le maintien en position de deux éléments de tuyauterie, à savoir un raccord sur la face supérieure équipée de protubérances cylindriques et un tube sur les deux faces latérales pourvues de trous traversants.

Le dispositif 1 d'aide à la soudure se présente sous la forme d'un corps creux ayant la configuration d'un parallélépipède rectangle, ayant au moins une face supérieure 2, horizontale, et deux faces latérales 3, 4, verticales et distinctes l'une de l'autre d'une distance D. Dans l'exemple illustré, il se présente sous la forme d'un cube creux à quatre faces, la cinquième face 5 constituant la face inférieure du cube.

De manière caractéristique selon l'invention, la face supérieure 2 est équipée d'un ensemble de protubérances cylindriques 6, venant en saillie vers l'extérieur du cube. Dans cet ensemble, chaque protubérance a un diamètre déterminé qui est en correspondance avec le diamètre d'un élément de tuyauterie standard, notamment d'un raccord mis en oeuvre lors d'une opération de soudure. On comprend que le nombre de protubérances et le diamètre de chacune est fonction des types de raccord habituellement utilisés soit par un professionnel soit par un bricoleur. S'agissant par exemple de raccords connus sous les dénominations « sphéro », « soudo » ou « GCU », les protubérances cylindriques ont des diamètres qui vont classiquement de 10 à 18 mm.

Dans un exemple précis de réalisation, qui correspond à celui qui est illustré aux figures 1 et 2, la face supérieure 2 est équipée d'un ensemble de vingt protubérances 6 réparties en quatre rangées 6a, 6b, 6c et 6d de cinq protubérances ayant respectivement des diamètres de 10 mm, 12 mm, 14 mm, 16 mm et 18 mm.

Les deux faces latérales 3, 4, sont pourvues quant à elles, d'orifices traversants 7. Plus précisément, chaque face latérale 3, 4 comporte strictement le même ensemble d'orifices traversants, avec le même nombre, la même disposition et les mêmes diamètres. Les orifices traversants des deux faces latérales 3, 4, sont disposés en regard les uns des autres.

Dans l'exemple précis de réalisation qui est illustré aux figures, chacune des deux faces latérales 3, 4 est percée de vingt-quatre orifices traversants 7, répartis en quatre colonnes 9a, 9b, 9c et 9d de six orifices 7 chacune. Il s'agit, dans cet exemple de deux orifices de diamètre 28 mm, de trois orifices de diamètre 23 mm, de trois orifices de diamètre 18 mm, de quatre orifices diamètre 16 mm, de quatre orifices de diamètre 14 mm, de quatre orifices de diamètre 14 mm et de quatre orifices de diamètre 10 mm.

La figure 2 illustre comment est mis en oeuvre le dispositif 1.

Sur une protubérance 6 qui en l'occurrence se trouve sur la troisième rangée 8c et qui est la plus proche du bord avant 2a de la face supérieure 2, l'utilisateur a emboîté un raccord 10 qui est connu sous la dénomination GCU et fourni par la firme BROSSETTE. Il s'agit d'un raccord droit, avec une portion inférieure 10a présentant un filetage extérieur et une portion supérieure 10b formée d'un tube. Ceci est donné à titre d'exemple. Peut être placé sur les protubérances cylindriques 6 tout type de raccord, qu'il soit droit ou coudé, qu'il s'agisse de raccord laiton, de raccord cuivre ou de tout autre raccord. Il suffit à l'utilisateur de choisir pour la mise en place d'un raccord donné la protubérance cylindrique dont le diamètre permet l'emboîtement dudit raccord.

Une fois le raccord 10 mis en place, il est maintenu en place verticalement, grâce à son emboîtement sur la protubérance et il est alors possible à l'utilisateur de réaliser l'opération de soudure.

L'intérêt de disposer sur la face supérieure 2 d'un ensemble de protubérances 6 dont certaines ont le même diamètre consiste dans la possibilité d'effectuer en quelque sorte un préstockage des raccords en vue de leur soudure. Ainsi le chalumeau étant en action, l'utilisateur peut réaliser des soudures successives sur les différents raccords prépositionnés sur le dispositif, sans manipulation supplémentaire et notamment sans avoir l'obligation d'éteindre son chalumeau puis de le réallumer. Cette faculté de préstockage constitue un avantage important en matière de gain de temps.

Sur la figure 2, on a également illustré la mise en place d'un tube 11, rectiligne, d'une certaine longueur L, en tout cas supérieure à la distance D séparant les deux faces latérales 3, 4. Ce tube 11 est introduit successivement dans un premier orifice traversant 7a de la première face latérale 3 puis dans un second orifice 7b de la seconde face latérale 4. Les deux orifices 7a, 7b forment une paire d'orifices traversants, de même diamètre. Ils sont également disposés selon le même emplacement sur chacune des deux faces 3, 4. Ainsi lorsque le tube 11 est mis en place comme illustré à la figure 2, sa direction générale est perpendiculaire au plan des deux faces latérales 3, 4 et donc sensiblement horizontale.

Pour un tube 11 de diamètre extérieur donné, le diamètre intérieur des deux orifices traversants 7a, 7b est légèrement supérieur au dit diamètre donné, pour permettre le coulissement du tube 11.

Une fois le tube 11 mis en place, celui-ci est maintenu en place horizontalement par l'effet de son propre poids et l'utilisateur peut réaliser l'opération de soudure.

Le dispositif 1 peut simplement être posé sur une table ou éventuellement un établi et peut aussi y être fixé par tout moyen approprié.

Cependant, le dispositif 1 peut comporter un moyen de mise à hauteur qui lui soit incorporé, par exemple un pied ou un trépied fixé sous la face inférieure 5.

La face supérieure 2 et les deux faces latérales 3, 4 du dispositif 1 doivent être dans une matière qui est susceptible de résister aux températures mises en oeuvre lors du soudage, températures qui peuvent être supérieures à 1 000° C. De préférence, il s'agit de plaques métalliques, d'aluminium ou de bois ou éventuellement en béton ou en matériau réfractaire. Les différentes faces peuvent être des pièces individuelles ou assemblées ou éventuellement être obtenues d'une seule pièce par moulage.

Dans un mode de réalisation, non illustré, les différentes faces du dispositif sont repliables à plat, pour minimiser leur encombrement lors du transport du dispositif 1. Pour ce faire, ces différentes faces sont, au niveau de leur ligne de liaison, équipées de moyens d'articulation, par exemple sous forme de charnières équipées d'un système de verrouillage/déverrouillage permettant d'adopter soit une configuration déployée comme illustrée à la figure 1 ou une configuration à plat.

Si le dispositif comporte un pied, celui-ci est de préférence démontable de manière à également limiter son encombrement lors du transport.

Le dispositif d'aide à la soudure d'éléments de tuyauterie de la présente invention est particulièrement destiné à la plomberie sanitaire et à l'installation de chauffage central. Cependant il peut être mis en oeuvre dans tout type d'autres applications. Il revient à l'homme du métier de l'application concernée de définir le nombre, les dimensions en hauteur et en diamètre des protubérances cylindriques et éventuellement le nombre et le diamètre des trous traversants, ce qui a été indiqué ci-dessus dans la description n'ayant été donnée qu'à titre d'exemple non limitatif.

## Revendications

1. Dispositif d'aide (1) à la soudure d'éléments de tuyauterie, **caractérisé par** une face support (2) comportant un ensemble de protubérances cylindriques (6), chaque protubérance (6) ayant un diamètre déterminé permettant un emboîtement d'un élément de tuyauterie donné, notamment un raccord (10) et son maintien en position pendant l'opération de soudure.

2. Dispositif selon la revendication 1, **caractérisé en ce que** Les protubérances cylindriques (6) sont des éléments rapportés, solidarisés perpendiculairement à la face support (2), cette solidarisation pouvant être obtenue notamment par vissage, soudage ou collage.

3. Dispositif selon la revendication 2, **caractérisée en ce que** les protubérances cylindriques sont des tronçons de tube creux, qui sont fixés sur ladite face support.

4. Dispositif selon la revendication 1, **caractérisé en ce que** les protubérances cylindriques sont des prolongements en saillie de ladite face support (2), étant dans le même matériau constitutif de ladite face.

5. Dispositif selon l'une des revendications 1 à 4, **caractérisé en ce qu'**il comporte un ensemble de protubérances cylindriques pour l'emboîtement de raccords pour tubes de diamètre allant de 10 à 18 mm, par exemple des diamètres suivants : 10, 12, 14, 16 et 18 mm.

6. Dispositif selon l'une des revendications 1 à 5, **caractérisé en ce que** ladite protubérance a une hauteur de 0.5 à 2 cm.

7. Dispositif selon l'une des revendications 1 à 6, **caractérisé par** deux faces latérales sensiblement verticales (3, 4), qui comportent chacune le même ensemble d'orifices traversants (7), les orifices (7) des deux faces (3, 4) étant disposés au regard les uns des autres en sorte de permettre le passage et le coulissement d'un élément tubulaire (11) donné, dont la longueur (L) est supérieure à la distance (D) entre les deux faces latérales (3, 4), dans deux orifices (7a, 7b) de même diamètre et son maintien en position pendant l'opération de soudure.

8. Dispositif selon la revendication 7, **caractérisé en ce que** La face support (2), équipée des protubérances cylindriques (6), forme une entretoise entre les deux faces latérales (3, 4) pourvues des orifices traversants (7).

9. Dispositif selon la revendication 8, **caractérisé en ce qu'**il se présente sous la forme d'une structure creuse à quatre faces (2, 3, 4, 5), une face complémentaire (5) formant entretoise entre les bords inférieurs des deux faces latérales (3, 4).

10. Dispositif selon l'une des revendications 1 à 9, **caractérisé en ce qu'**il comporte des moyens de mise à hauteur et/ou des moyens de fixation à un matériel support.

11. Dispositif selon l'une des revendications 7 à 10, **caractérisé en ce qu'**il comporte des moyens d'articulation permettant la mise à plat les unes contres les autres d'au moins la face support (2) et les deux faces latérales (3, 4).
